# EUROPÄISCHE PATENTSCHRIFT

(11) **EP 2 691 627 B1**
(45) Veröffentlichungstag und Bekanntmachung des Hinweises auf die Patenterteilung: **13.05.2015**
(21) Anmeldenummer: 12710145.9
(22) Anmeldetag: 20.03.2012
(51) Int. Cl.: F02D 41/22

(54) **VERFAHREN ZUM ÜBERPRÜFEN VON KOMPONENTEN EINES KRAFTWAGENS UND KRAFTWAGEN MIT ENTSPRECHENDER ÜBERPRÜFUNGSEINRICHTUNG**
METHOD FOR MONITORING COMPONENTS OF A MOTOR VEHICLE AND MOTOR VEHICLE HAVING A CORRESPONDING MONITORING DEVICE
PROCÉDÉ POUR LA VÉRIFICATION D'ÉLÉMENTS CONSTITUTIFS D'UN VÉHICULE AUTOMOBILE ET VÉHICULE AUTOMOBILE ÉQUIPÉ D'UN DISPOSITIF DE VÉRIFICATION CORRESPONDANT

(30) Priorität: 29.03.2011 DE 102011015396
(43) Veröffentlichungstag der Anmeldung: 05.02.2014
(73) Patentinhaber: Audi AG, 85045 Ingolstadt (DE)
(72) Erfinder: PERBANDT, Thomas, 86609 Donauwörth (DE); MERL, Reinhard, 85057 Ingolstadt (DE)
(74) Vertreter: Herbst, Matthias Heinz
(86) Internationale Anmeldenummer: PCT/EP2012/001214
(87) Internationale Veröffentlichungsnummer: WO 2012/130403

(56) Entgegenhaltungen:
- EP-A1- 1 734 241
- DE-A1- 19 544 022
- DE-A1- 19 908 352
- DE-A1-102007 052 292
- DE-A1-102008 025 569

## Beschreibung

Die Erfindung betrifft ein Verfahren zum Überprüfen einer Funktionstüchtigkeit einer ersten und einer zweiten Komponente eines Kraftwagens. Für die Überprüfung bestehen dabei folgende Abhängigkeiten: Für eine gültige Überprüfung der ersten Komponente muss ein vorbestimmter Fahrbetriebszustand des Kraftwagens vorliegen. Für eine gültige Überprüfung der zweiten Komponente muss die erste Komponente funktionstüchtig sein. Die Erfindung betrifft auch einen Kraftwagen mit einer Überwachungseinrichtung für die beiden Komponenten sowie mit einer Navigationsassistenzeinrichtung. Unter Komponenten werden hier insbesondere solche von emissionsmindernden Einrichtungen des Kraftwagens verstanden.

Bei einem Kraftwagen, beispielsweise einem Personenkraftwagen, kann vorgesehen sein, einzelne Komponenten durch eine Überwachungseinrichtung regelmäßig auf ihre Funktionstüchtigkeit hin zu überprüfen. So kann etwa ein elektronisches Motorsteuergerät des Kraftwagens dazu ausgelegt sein, einen Katalysator des Kraftwagens daraufhin zu überprüfen, ob er noch eine ausreichend hohe Sauerstoffspeicherfähigkeit aufweist. Dazu kann ein Restsauerstoffgehalt eines den Katalysator durchströmenden Abgases mittels einer stromabwärts des Katalysators angeordneten Lambda-Messsonde gemessen werden. Problematisch bei einer solchen Überwachung ist, dass bei einem unerkannten Defekt der Lambda-Messsonde falsche, aber plausibel erscheinende Messwerte dazu führen können, dass ein Defekt des Katalysators von dem Motorsteuergerät unerkannt bleibt. Dies kann zu einem erhöhten Ausstoß von Schadstoffen führen, der erst erkannt wird, wenn der Kraftwagen in einer Werkstatt untersucht wird.

Im Zusammenhang mit emissionsmindernden Einrichtungen eines Kraftwagens, wie z. B. einem Katalysator oder einer Abgasrückführung, ist die selbstständige Überprüfung der Komponenten dieser Einrichtungen durch den Kraftwagen in einigen Ländern gesetzlich vorgeschrieben. In der Europäischen Union wird eine solche Überwachungseinrichtung als "Europäische On Board Diagnose" (EOBD) bezeichnet. In den USA ist es bereits heute in einigen Staaten Pflicht, einen Kraftwagen mit einer Schnittstelle auszustatten, über die ein Diagnosegerät, beispielweise bei einer Straßenkontrolle, jederzeit aktuelle Messwerte der Überwachungseinrichtung auslesen kann.

Um eine Fehldiagnose in Bezug auf eine bestimmte Komponente aufgrund einer defekten Messsonde, eines defekten Ventils oder eines anderen, mit der Komponente in Wechselwirkung stehenden defekten Bauteils zu vermeiden, werden Messungen zu einer Komponente in einigen Fällen nur dann als gültig anerkannt, wenn auch die Messsonde usw. ebenfalls überprüft und als funktionstüchtig erkannt wurden.

Eine Überprüfung einer Komponente ist aber nicht zu jedem Zeitpunkt möglich. So setzt eine sinnvolle Überprüfung der oben erwähnten Lambda-Messsonde voraus, dass der Motor des Kraftwagens zumindest einmal mit einem mageren (λ>1) und einmal mit einem fetten (λ<1) Kraftstoffgemisch betrieben wurde. Auch muss eine zu untersuchende Komponente oft eine bestimmte Betriebstemperatur aufweisen, bevor sie sinnvoll getestet werden kann.

Ein Problem kann sich hierbei ergeben, wenn ein Kraftwagen regelmäßig nur für Fahrten verwendet wird, bei denen solche Betriebsbedingungen für die Überprüfung einer ersten Komponente erst am Ende der Fahrt vorliegen. Dann ist es nicht möglich, danach eine zweite Komponente zu überprüfen, für deren Überprüfung es nötig ist, dass die Funktionstüchtigkeit der ersten Komponente nachgewiesen ist. So bleibt die zweite Komponente über längere Zeit hinweg ungeprüft.

Aus der DE 10 2009 038 110 A1 ist ein Verfahren zum Verwalten eines Abgasnachbehandlungssystems in einem Fahrzeug mit einer Katalysatoreinrichtung bekannt. Gemäß dem Verfahren wird eine digitale Karte überwacht, durch die eine vorhergesagte Fahrbetriebsbedingung auf einer Fahrtroute bereitgestellt ist. Auf der Grundlage eines vorhergesagten Abgastemperaturprofils wird der Betrieb der Katalysatoreinrichtung gesteuert.

Aus der DE 195 44 022 A1 ist eine Einrichtung zur Bereitstellung einer Höheninformation in einem Kraftfahrzeug bekannt, wobei diese Höheninformation dem kartengestützen Ortungs- beziehungsweise Navigationssystem als Zusatzinformation entnommen wird. Ein Anwendungsfall für die Höheninformation ist die höhenabhängige Abschaltung oder Zuschaltung einer Diagnose von abgasrelevanten Systemen in Kraftfahrzeugen. Die Überwachungsfunktion wird abgeschaltet, wenn erkannt wird, dass sich das Fahrzeug in einer Höhe oberhalb von zum Beispiel 2400 m befindet.

In der DE 10 2008 025 569 A1 ist ein Verfahren zum Steuern eines Funktionssystems eines Kraftfahrzeugs mit einem Verbrennungsmotor beschrieben, bei welchem eine Prognose zu einer in der Zukunft liegenden Betriebsweise des Verbrennungsmotors erstellt wird und dann vorausschauend ein Zustand des Funktionssystems mittels Berücksichtigen der Prognose durchgeführt wird. Das Funktionssystem ist ein Partikelfilter, ein Katalysator, eine Einrichtung zur Adaption einer Lambdasonde, eine Einrichtung zur Tankentlüftungsdiagnose, eine Klimaanlage oder ein Thermospeicher.

Aus der DE 199 08 352 A1 ist ein Verfahren zum Betreiben eines Kraftstoffversorgungssystems einer Brennkraftmaschine insbesondere eines Kraftfahrzeugs bekannt, bei dem eine Diagnose eines Kraftstoffversorgungssystems durchgeführt werden kann, wobei eine elektrische Überprüfung eines Drucksensors durchgeführt wird und gleichzeitig eine allgemeine Plausibilitätskontrolle des Kraftstoffversorgungssystems durchgeführt wird und Endstufen eines Drucksteuerventils und eines Hochdruckeinspritzventils überprüft werden.

Aus der EP 1 734 241 A1 ist ein Verfahren zum Überprüfen einer sekundären Lambdasonde beschrieben, wobei zunächst eine erste Lambdasonde stromaufwärts in einem vorgeschalteten Katalysator angesteuert wird, um hierdurch gezielt bestimmte Messbedingungen für die sekundäre Lambdasonde zu erzeugen, um dann mittels der sekundären Lambdasonde die Werte zu messen. Anhand der Messwerte kann dann der Zustand der sekundären Lambdasonde überprüft werden.

Es ist Aufgabe der vorliegenden Erfindung, Komponenten eines Kraftwagens möglichst häufig überprüfen zu können.

Die Aufgabe wird durch ein Verfahren gemäß Patentanspruch 1 und einen Kraftwagen gemäß Patentanspruch 8 gelöst. Vorteilhafte Weiterbildungen der Erfindung sind durch die Unteransprüche gegeben.

Das erfindungsgemäße Verfahren dient zum Überprüfen einer Funktionstüchtigkeit sowohl einer ersten als auch einer zweiten Komponente eines Kraftwagens. Beispielsweise kann es sich bei der ersten Komponente um eine Lambda-Messsonde und bei der zweiten Komponente um einen Katalysator handeln.

Mittels des Verfahrens ist die Überprüfung selbst dann möglich, wenn die folgenden Voraussetzungen erfüllt sein müssen, damit die Überprüfungsergebnisse überhaupt eine sinnvolle Aussage über die Funktionstüchtigkeit erlauben. Für eine gültige Überprüfung der ersten Komponente (also in dem Beispiel die Überprüfung der Lambda-Messsonde) muss ein vorbestimmter erster Fahrbetriebszustand des Kraftwagens vorliegen, also z.B. eine bestimmte Temperatur der Messsonde oder eine durchlaufene bestimmte Abfolge von eingespritzten Kraftstoffgemischen. Bei der zweiten Komponente (in dem Beispiel ist dies der Katalysator) ist für deren gültige Überprüfung die Funktionstüchtigkeit der ersten Komponente (in dem Beispiel eben die Messsonde) vorausgesetzt.

Gemäß dem erfindungsgemäßen Verfahren wird zu einer bevorstehenden Fahrt unter Berücksichtigung von Navigationsdaten ermittelt, ob der erste Fahrbetriebszustand voraussichtlich vorliegen wird. Unter Navigationsdaten werden hier allgemein solche Daten verstanden, durch welche Informationen betreffend eine Route der Fahrt wiedergegeben sind. Dies können z.B. Kartendaten aus einem Navigationsgerät, GPS-Informationen aus einem GPS-Empfänger, Verkehrsinformationen aus einem RDS (RDS - Radio Data System) oder geographische Informationen über einen Höhenverlauf der Route sein.

Das erfindungsgemäße Verfahren weist den Vorteil auf, dass erkannt werden kann, ob sich während einer Fahrt voraussichtlich die Möglichkeit ergeben wird, die ersten Komponente zu überprüfen. Ist dies der Fall, muss während der Fahrt nicht erst ein Überprüfungsergebnis zu der ersten Komponente, also in dem Beispiel dasjenige zur Lambda-Messsonde, abgewartet werden, um dann die zweite Komponente zu überprüfen. Die zweite Komponente kann jederzeit bei Vorliegen entsprechender Betriebsbedingungen unmittelbar überprüft werden. Die zweite Komponente wird bei dem erfindungsgemäßen Verfahren zeitlich vor der ersten Komponente überprüft. Durch das Analysieren der Navigationsdaten ist ja bekannt, dass im Verlauf der Fahrt noch die Möglichkeit besteht, die Richtigkeit des Überprüfungsergebnisses zur zweiten Komponente später durch die Überprüfung der ersten Komponente zu validieren. Insgesamt können bei einer Fahrt somit mehr Gelegenheiten genutzt werden, die zweite Komponente zu testen.

Die Validierung des Überprüfungsergebnisses kann insbesondere derart erfolgen, dass die zweite Komponente überprüft wird, sobald ein vorbestimmter, für eine gültige Überprüfung der zweiten Komponente vorausgesetzter zweiter Betriebszustand des Kraftwagens vorliegt, und dass ein Ergebnis der Überprüfung nur bereitgestellt wird, falls ein Ergebnis der Überprüfung der ersten Komponente deren Funktionstüchtigkeit anzeigt.

Eine vorteilhafte Weiterbildung des erfindungsgemäßen Verfahren ergibt sich, wenn unter Berücksichtigung der Navigationsdaten zusätzlich ermittelt wird, ob während der Fahrt der (für die Überprüfung der zweiten Komponente vorausgesetzte) zweite Fahrbetriebszustand voraussichtlich vorliegen wird. Dies erlaubt es, einen Zeitpunkt für einen Beginn einer Messung zur Überprüfung der zweiten Komponente bereits im Voraus festzulegen. Die Messung kann damit schon begonnen werden, bevor der zweite Fahrbetriebszustand erreicht ist. Dadurch können in vorteilhafter Weise für die Überprüfung umfangreichere Messungen durchgeführt werden, die beispielsweise einen Übergang in den zweiten Fahrbetriebszustand mit umfassen können. Dies ist ansonsten nur durch kontinuierliches Messen während der gesamten Fahrt möglich. Der gleiche Vorteil kann natürlich auch in Bezug auf den ersten Betriebszustand durch Festlegen eines entsprechenden Zeitpunkts erlangt werden:

Der erfindungsgemäße Verfahren kann in vielseitiger Weise für die Überprüfung von Komponenten des Kraftwagens eingesetzt werden. So kann eine der Komponenten beispielsweise eine Lambda-Sonde, einen Katalysator, ein Bauteil eines Sekundärluftsystems, eine Verstelleinrichtung für eine Nockenwelle, einen Temperatursensor (insbesondere einen Abgas-Temperatursensor), eine Einrichtung zum Messen einer von einem Motor angesaugten Luftmasse oder ein Steuergerät umfassen.

Bei einer weiteren Ausgestaltung des erfindungsgemäßen Verfahrens wird zumindest ein Wert, der den Fahrbetriebszustand des Kraftwagens beschreibt, mittels eines numerischen Modells für eine Umgebung, durch welche die Fahrtroute verläuft, ermittelt. Damit kann z. B. dem Problem begegnet werden, dass für eine bevorstehende Fahrt durch eine Stadt nicht bekannt ist, zu welchem Zeitpunkt eine bestimmte Ampel, an der die Route vorbeiführt, auf Rot steht. Ein entsprechendes Modell für eine städtische Umgebung kann dazu genutzt werden, zumindest eine Wahrscheinlichkeit für einen Halt des Kraftwagens an einer roten Ampel zu bestimmen. Hierdurch lässt sich ein Fahrtbetriebszustand des Kraftwagens verlässlicher vorhersagen.

Eine andere vorteilhafte Ausgestaltung des erfindungsgemäßen Verfahrens sieht vor, zumindest einen Wert, welcher einen Fahrbetriebszustand des Kraftwagens beschreibt, mittels eines numerischen Modells für zumindest einen Teil des Kraftwagens zu ermitteln. Ein solches Modell von physikalischen Vorgängen in dem Teil des Kraftwagens erlaubt eine verhältnismäßig genaue Aussage über einen zukünftigen Betriebszustand des Teils des Kraftwagens in Abhängigkeit von den Fahrtroutendaten.

Die Durchführung des erfindungsgemäßen Verfahrens ist durch den erfindungsgemäßen Kraftwagen ermöglicht. Dieser weist dazu eine Navigationsassistenzeinrichtung auf, durch welche zu einer Fahrt Fahrtroutendaten ermittelbar sind. Eine Navigationsassistenzeinrichtung kann z. B. ein Navigationsgerät, einen GPS-Empfänger oder ein Rundfunkradio mit RDS-Empfänger umfassen. Zusätzlich ist eine Überwachungseinrichtung bereitgestellt, die dazu ausgelegt ist, eine Funktionstüchtigkeit einer ersten und eine zweiten Komponente des Kraftwagens zu überprüfen. Die Überwachungseinrichtung kann die Fahrtroutendaten von der Navigationsassistenzeinrichtung empfangen und in Abhängigkeit von den Fahrtroutendaten ermitteln, ob eine Möglichkeit zur Überprüfung der ersten Komponente während der Fahrt voraussichtlich gegeben ist. Die zweite Komponente wird dann während der Fahrt überprüft, falls auch die Möglichkeit einer Überprüfung der ersten Komponente gegeben ist, und die Überprüfung der zweiten Komponente hierbei während der Fahrt zeitlich vor derjenigen der ersten Komponente begonnen.

Bei dem erfindungsgemäßen Kraftwagen ergeben sich dieselben Vorteile, wie sie bereits im Zusammenhang mit dem erfindungsgemäßen Verfahren beschrieben wurden. Der erfindungsgemäße Kraftwagen kann zudem in derselben Weise weitergebildet werden, wie es im Zusammenhang mit dem erfindungsgemäßen Verfahren beschrieben ist.

Die Erfindung wird im folgenden anhand eines bevorzugten Ausführungsbeispiels näher erläutert. Dazu zeigt:
Fig. 1 einen Personenkraftwagen gemäß einer Ausführungsform des erfindungsgemäßen Kraftwagens;
Fig. 2 ein Diagramm betreffend einen vorhergesagten zeitlichen Verlauf einer Geschwindigkeit des Personenkraftwagens von Fig. 1, wie er von einer Überwachungseinrichtung des Personenkraftwagens gemäß einer Ausführungsform des erfindungsgemäßen Verfahrens ermittelt wurde; und
Fig. 3 ein Diagramm betreffend einen von der Überwachungseinrichtung des Personenkraftwagens von Fig. 1 vorhergesagten zeitlichen Verlauf einer von einem Verbrennungsmotor des Personenkraftwagens zu erbringenden Leistung.

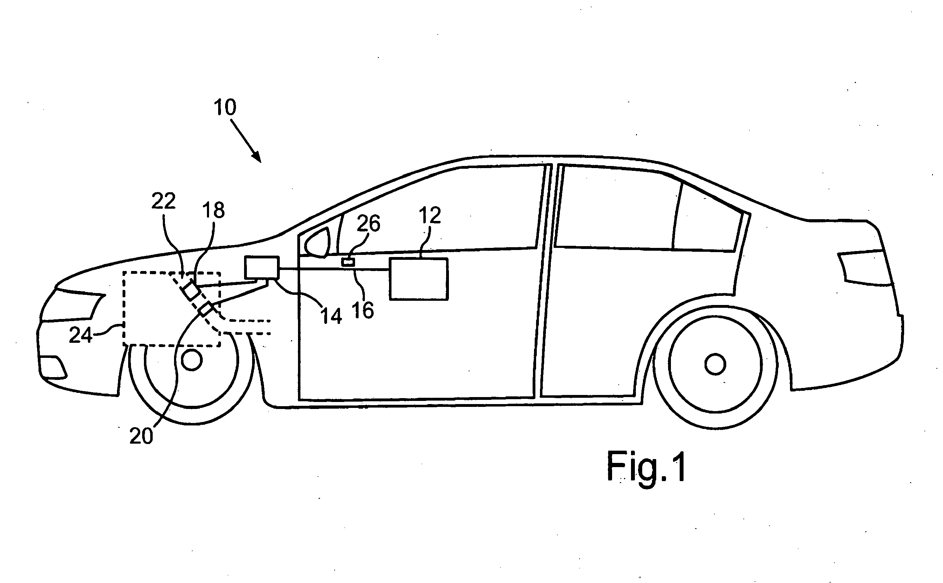

In dem in Fig. 1 gezeigten Beispiel ist ein Personenkraftwagen 10 mit einem Navigationsgerät 12 und einer Überwachungseinrichtung 14 dargestellt. Das Navigationsgerät 12 ist Bestandteil eines (nicht weiter dargestellten) Infotainmentsystems des Personenkraftwagens 10. Die Überwachungseinrichtung 14 ist Bestandteil eines elektronischen Motorsteuergeräts. Sie kann aber z. B. auch in einem anderen Steuergerät bereitgestellt oder auf mehrere Steuergeräte aufgeteilt sein.

Die Überwachungseinrichtung 14 ist mit dem Navigationsgerät 12 über einen Kommunikationsbus 16 gekoppelt, bei dem es sich beispielsweise um einen Bestandteil eines CAN (Controller Area Network), eines LIN (Local Interconnect Network) oder eines FlexRay-Feldbussystems handeln kann.

Durch die Überwachungseinrichtung 14 werden ein Katalysator 18 und eine Lambda-Messsonde 20 (im Folgenden kurz als Messsonde 20 bezeichnet) während einer Fahrt des Personenkraftwagens 10 auf ihre Funktionstüchtigkeit hin überprüft. Diese beiden Bauteile befinden sich an einem Auspuffkrümmer 22 eines Verbrennungsmotors 24 des Personenkraftwagens 10.

Die Überwachungseinrichtung 14 führt die Überprüfung während einer Fahrt gemäß einem gesetzlich vorgeschriebenen Messprotokoll durch. Gemäß diesem Protokoll darf der Katalysator 18 während einer Fahrt nur überprüft werden, wenn während derselben Fahrt festgestellt wird, dass die Messsonde 20 funktioniert. Mit anderen Worten müssen die beiden Überprüfungen innerhalb desselben Fahrzyklus erfolgen. Als ein Fahrzyklus ist die Zeitdauer zwischen dem Starten des Verbrennungsmotors 24 bis zu dessen Abschalten definiert.

In ungünstigen Fällen ist eine Überprüfung des Katalysators während eines bestimmten Fahrzyklus nicht möglich, wenn der Personenkraftwagen 10 z. B. während des gesamten Fahrzyklus auf keinem Abschnitt der Fahrtroute für eine bestimmte Mindestzeitdauer mit einer nahezu konstanten Geschwindigkeit fährt und dabei eine Temperatur des Katalysators über einem bestimmten Mindestwert liegt.

Bei dem Personenkraftwagen 10 ist das Verhältnis der Anzahl der Fahrzyklen, in denen der Katalysator 18 überprüft wurde, zu der Gesamtanzahl der mit dem Personenkraftwagen 10 gefahrenen Fahrzyklen besonders hoch:

Dazu werden zu Beginn eines Fahrzyklus Informationen über die bevorstehende Fahrt in Form von digitalen Navigationsdaten 26 vom Navigationsgerät 12 über den Kommunikationsbus 16 zur Überwachungseinrichtung 14 übertragen. Die Navigationsdaten 26 stehen immer dann bereit, wenn der Fahrer des Personenkraftwagens 10 das Ziel der Fahrt in das Navigationsgerät 12 eingibt.

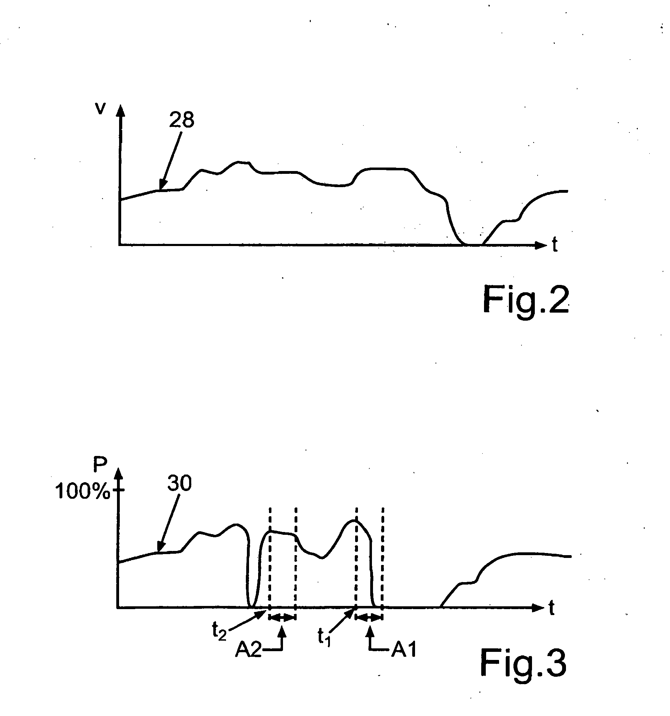

Auf der Grundlage der Navigationsdaten 26 wird von der Überwachungseinrichtung 14 mittels eines numerischen Modells ein in Fig. 2 dargestellter zeitlicher Verlauf 28 der Geschwindigkeit v des Personenkraftwagens berechnet, wie sie sich gemäß dem Modell voraussichtlich während der Fahrt zu jeweiligen Zeitpunkten t ergeben wird.

Zusätzlich berechnet die Überwachungseinrichtung 14 einen zeitlichen Verlauf 30 einer Leistung P, die der Verbrennungsmotor 24 zu bestimmten Zeitpunkten t voraussichtlich erzeugen muss. Die Leistung P ist in dem Diagramm von Fig. 3 als Prozentwert der maximal vom Verbrennungsmotor 24 erbringbaren Leistung dargestellt.

Anhand der beiden vorausberechneten Verläufe 28 und 30 ermittelt die Überwachungseinrichtung 14 in dem gezeigten Beispiel einen ersten Abschnitt A1 der Fahrtroute, in welchem sich der Personenkraftwagen 10 in einem Schubbetrieb befindet, der Motor bei rollendem Personenkraftwagen 10 also selbst keine nennenswerte Leistung erbringt und dennoch mit dem Antriebsstrang gekoppelt ist, so dass seine Drehzahl durch den Schwung des Personenkraftwagens 10 bestimmt ist.

Wenn der Personenkraftwagen 10 den Abschnitt A1 erreichen wird, werden voraussichtlich die gemäß dem Protokoll geforderten Bedingungen für eine Überprüfung der Messsonde 20 gegeben sein. Die Überwachungseinrichtung 14 speichert daher einen Wert für einen Zeitpunkt t₁, zu dem eine Messung für die Überprüfung der Messsonde 20 beginnen soll.

Zusätzlich ermittelt die Überwachungseinrichtung anhand der beiden Verläufe 28 und 30 einen Abschnitt A2 der Fahrtroute, der für eine Überprüfung des Katalysators 18 günstig ist. In dem Abschnitt A2 wird der Personenkraftwagen 10 voraussichtlich mit einer nahezu konstanten Geschwindigkeit v fahren, wobei der Verbrennungsmotor 24 eine nahezu konstante Leistung P erzeugt. Aus einem (nicht dargestellten) zeitlichen Verlauf einer Temperatur des Katalysators 18 geht hervor, dass der Katalysator 18 bei Erreichen des Abschnitts A2 auch heiß genug sein wird, um eine gemäß dem Protokoll gültige Überprüfung des Katalysators 18 durchführen zu können. Die Überwachungseinrichtung 14 speichert daher auch einen Wert für einen Zeitpunkt t₂, zu dem eine Messung für die Überprüfung des Katalysators 18 beginnen soll.

Während der Fahrt beginnt die Überwachungseinrichtung 18 die Diagnose des Katalysators 18, d.h. dessen Überprüfung, zum Zeitpunkt t₂. Dazu werden Signale der Messsonde 20 von der Überwachungseinrichtung 14 erfasst und gespeichert. Nach Beendigung der Messung, wenn der Personenkraftwagen 10 also den Abschnitt A2 der Fahrtroute verlassen hat, wird anhand der gemessenen Daten ermittelt, ob der Katalysator 18 in der vorgeschriebenen Weise funktioniert. Das Ergebnis dieser Analyse wird gespeichert und zunächst als ungültig markiert, so dass es nicht von einem (nicht dargestellten) Diagnosegerät aus der Überwachungseinrichtung 14 ausgelesen werden kann.

Zu dem späteren Zeitpunkt t₁ beginnt die Überwachungseinrichtung 14 die Überprüfung der Messsonde 20 durch Erfassen und Speichern weiterer Daten. Nachdem Personenkraftwagen 10 den Abschnitt A1 der Fahrtroute verlassen hat und die Messung also beendet ist, ermittelt die Überwachungseinrichtung 14 anhand der im Abschnitt A1 erfassten Daten, ob die Messsonde 20 defekt ist. Die Überwachungseinrichtung 14 speichert auch dieses Analyseergebnis, damit es von dem Diagnosegerät ausgelesen werden kann.

Falls die Messsonde 20 gemäß dem Analyseergebnis funktionstüchtig ist, wird zusätzlich die Markierung entfernt, durch welche das Auslesen des Analyseergebnisses betreffend den Katalysator verhindert ist. Damit steht dann auch dieses Analyseergebnis zum Auslesen bereit.

Neben einer Überwachung der Funktionstüchtigkeit des Katalysators 18 und der Messsonde 20 kann vorgesehen sein, durch die Überwachungseinrichtung 14 (oder weitere Überwachungseinrichtungen des Personenkraftwagens 10) beispielsweise auch eine Katalysatorheizung, einen Sensor für Verbrennungsaussetzer, eine Abgasrückführungseinrichtung, ein Sekundärluftsystem, ein Kraftstoffbehälterentlüftungssystem, Stromkreise oder eine Halteeinrichtung für einen Tankdeckel auf ihre Funktionstüchtigkeit hin zu überwachen.

Durch das Beispiel ist gezeigt, wie die Anzahl der Fahrzyklen vergrößert werden kann, in denen eine Diagnose eines Katalysators erfolgreich durchgeführt wird.

## Patentansprüche

1. Verfahren zum Überprüfen einer Funktionstüchtigkeit einer ersten (20) und einer zweiten (18) Komponente eines Kraftwagens (10), wobei für eine gültige Überprüfung der ersten Komponente (20) das Vorliegen eines vorbestimmten ersten Fahrbetriebszustands (A1) des Kraftwagens (10) und für eine gültige Überprüfung der zweiten Komponente (18) die Funktionstüchtigkeit der ersten Komponente (20) vorausgesetzt ist,
**dadurch gekennzeichnet, dass**
zu einer bevorstehenden Fahrt unter Berücksichtigung von Navigationsdaten (26), durch welche Informationen betreffend eine Fahrtstrecke wiedergegeben sind, ermittelt wird, ob der erste Fahrbetriebszustand (A1) voraussichtlich vorliegen wird, und, wenn dies der Fall ist, die Überprüfung der zweiten Komponente (18) dann während der Fahrt zeitlich vor derjenigen der ersten Komponente (20) begonnen wird.

2. Verfahren nach Anspruch 1, wobei die zweite Komponente (18) überprüft wird, sobald ein vorbestimmter, für eine gültige Überprüfung der zweiten Komponente (18) vorausgesetzter zweiter Betriebszustand (A2) des Kraftwagens (10) vorliegt, und ein Ergebnis der Überprüfung nur bereitgestellt wird, falls ein Ergebnis der Überprüfung der ersten Komponente (20) deren Funktionstüchtigkeit anzeigt.

3. Verfahren nach einem der vorhergehenden Ansprüche, wobei unter Berücksichtigung der Navigationsdaten (26) zusätzlich ermittelt wird, ob der zweite Fahrbetriebszustand (A2) voraussichtlich vorliegen wird.

4. Verfahren nach einem der vorhergehenden Ansprüche, wobei eine der Komponenten (18, 20) eine Lambda-Sonde (20), einen Katalysator (18), ein Bauteil eines Sekundärluftsystems, eine Verstelleinrichtung für eine Nockenwelle, einen Temperatursensor, insbesondere einen Abgas-Temperatursensor, eine Einrichtung zum Messen einer von einem Motor angesaugten Luftmasse oder ein Steuergerät umfasst.

5. Verfahren nach einem der vorhergehenden Ansprüche, wobei anhand der Navigationsdaten (26) eine Geschwindigkeit (v) des Kraftwagens (10), eine von einem Motor (24) des Kraftwagens (10) zu erbringenden Leistung (P), eine Drehzahl des Motors, ein eingelegter Getriebegang eines Getriebes des Kraftwagens, ein Unterdruck in einem Einlasskrümmer des Kraftwagens, eine Zusammensetzung eines Kraftstoff-Luft-Gemisches oder eine Temperatur eines Bauteils des Kraftwagens als ein den Fahrbetriebszustand beschreibender Wert (v, P) zeitlich im Voraus ermittelt wird.

6. Verfahren nach einem der vorhergehenden Ansprüche, wobei zumindest ein den Fahrbetriebszustand beschreibender Wert (v, P) mittels eines numerischen Modells für eine Umgebung, durch welche die Fahrtstrecke verläuft, ermittelt wird.

7. Verfahren nach einem der vorhergehenden Ansprüche, wobei zumindest ein den Fahrbetriebszustand beschreibender Wert (v, P) mittels eines numerischen Modells für zumindest einen Teil des Kraftwagens (10) ermittelt wird.

8. Kraftwagen, mit einer Navigationsassistenzeinrichtung (12), durch welche zu einer Fahrt Fahrtstreckendaten (26) ermittelbar sind, und mit einer Überwachungseinrichtung (14), die dazu ausgelegt ist, eine Funktionstüchtigkeit einer ersten (20) und eine zweiten (20) Komponente des Kraftwagens zu überprüfen, wobei für eine gültige Überprüfung der ersten Komponente (20) das Vorliegen eines vorbestimmten ersten Fahrbetriebszustands (A1) des Kraftwagens (10) und für eine gültige Überprüfung der zweiten Komponente (18) die Funktionstüchtigkeit der ersten Komponente (20) vorausgesetzt ist,
**dadurch gekennzeichnet, dass**
die Überwachungseinrichtung (14) dazu ausgelegt ist, die Fahrtstreckendaten (26) von der Navigationsassistenzeinrichtung (12) zu empfangen, in Abhängigkeit von den Fahrtstreckendaten (26) zu ermitteln, ob eine Möglichkeit zur Überprüfung der ersten Komponente (20) während der Fahrt voraussichtlich gegeben sein wird, und die zweite Komponente (18) während der Fahrt zu überprüfen, falls auch die Möglichkeit einer Überprüfung der ersten Komponente (20) voraussichtlich gegeben ist, und die Überprüfung der zweiten Komponente (18) dann während der Fahrt zeitlich vor derjenigen der ersten Komponente (20) zu beginnen.

## Claims

1. Method for monitoring functionality of a first (20) and a second (18) component of a motor vehicle (10), valid monitoring of the first component (20) requiring a predetermined first operating state (A1) of the motor vehicle (10) to be present and valid monitoring of the second component (18) requiring the functionality of the first component (20), **characterised in that** it is determined for a forthcoming journey, by taking into account navigation data (26) which provide information regarding a route, whether the first operating state (A1) is expected to be present, and, if this is the case, the monitoring of the second component (18) is begun during the journey prior to the monitoring of the first component (20).

2. Method according to claim 1, wherein the second component (18) is monitored as soon as a predetermined second operating state (A2) of the motor vehicle (10), which is required for valid monitoring of the second component (18), is present, and a result of the monitoring is only made available if a result of the monitoring of the first component (20) shows that said first component is functional.

3. Method according to either of the preceding claims, wherein it is additionally determined, by taking the navigation data (26) into account, whether the second operating state (A2) is expected to be present.

4. Method according to any of the preceding claims, wherein one of the components (18, 20) comprises a lambda probe (20), a catalytic converter (18), a component of a secondary ventilation system, an adjustment device for a camshaft, a temperature sensor, in particular an exhaust gas temperature sensor, a device for measuring an air mass drawn in by an engine, or a control device.

5. Method according to any of the preceding claims, wherein a speed (v) of the motor vehicle (10), a power (P) to be generated by an engine (24) of the motor vehicle (10), a rotational speed of the engine, a selected transmission gear of a gearbox of the motor vehicle, a negative pressure in an intake manifold of the motor vehicle, a composition of a fuel-air mixture or a temperature of a component of the motor vehicle is determined in advance, on the basis of the navigation data (26), as a value (v, P) which describes the operating state.

6. Method according to any of the preceding claims, wherein at least one value (v, P) which describes the operating state is determined by means of a numerical model for an environment through which the route extends.

7. Method according to any of the preceding claims, wherein at least one value (v, P) which describes the operating state is determined by means of a numerical model for at least a part of the motor vehicle (10).

8. Motor vehicle comprising a navigation device (12) by means of which route data (26) that relate to a journey can be determined, and
comprising a monitoring device (14) which is configured to monitor functionality of a first (20) and a second (20) component of the motor vehicle, valid monitoring of the first component (20) requiring a predetermined first operating state (A1) of the motor vehicle (10) to be present and valid monitoring of the second component (18) requiring the functionality of the first component (20), **characterised in that** the monitoring device (14) is configured to receive the route data (26) from the navigation device (12), to determine on the basis of the route data (26) whether a possibility for monitoring the first component (20) during the journey is expected to be present, and to monitor the second component (18) during the journey if the possibility of monitoring the first component (20) is also expected to be present, and then to begin the monitoring of the second component (18) during the journey prior to the monitoring of the first component (20).

## Revendications

1. Procédé de vérification du bon fonctionnement d'un premier (20) et d'un deuxième (18) élément d'un véhicule automobile (10), la présence d'un premier état de fonctionnement prédéterminé (A1) du véhicule automobile (10) étant présupposée pour une vérification valide du premier élément (20) et le bon fonctionnement du premier élément (20) étant présupposé pour une vérification valide du deuxième élément (18),
**caractérisé en ce que**, pour un trajet à venir et en tenant compte de données de navigation (26) par lesquelles sont représentées des informations concernant un trajet, on détermine si le premier état de fonctionnement (A1) sera présent selon toutes prévisions et, si c'est le cas, on commence ensuite la vérification du deuxième élément (18) pendant le trajet chronologiquement avant la vérification du premier élément (20).

2. Procédé selon la revendication 1, selon lequel on vérifie le deuxième élément (18) dès qu'un deuxième état prédéterminé de fonctionnement (A2) du véhicule automobile (10), état présupposé pour une vérification valide du deuxième élément (18), est présent et on ne fournit un résultat de la vérification que si un résultat de la vérification du premier élément (20) indique le bon fonctionnement de celui-ci.

3. Procédé selon l'une des revendications précédentes, selon lequel on détermine en plus, en tenant compte des données de navigation (26), si le deuxième état de fonctionnement (A2) sera présent selon toutes prévisions.

4. Procédé selon l'une des revendications précédentes, selon lequel l'un des éléments (18, 20) comprend une sonde à oxygène (20), un catalyseur (18), un composant d'un système d'insufflation d'air secondaire, un dispositif de réglage pour un arbre à cames, un capteur de température, notamment un capteur de température de gaz d'échappement, un dispositif pour la mesure d'une masse d'air aspirée par un moteur ou un appareil de commande.

5. Procédé selon l'une des revendications précédentes, selon lequel, comme valeur (v, P) décrivant l'état de fonctionnement, on détermine préalablement à l'aide des données de navigation (26) une vitesse (v) du véhicule automobile (10), une puissance (P) à apporter par un moteur (24) du véhicule automobile (10), une vitesse de rotation du moteur, un rapport enclenché d'une boîte de vitesses du véhicule automobile, une dépression dans une tubulure d'admission du véhicule automobile, une composition d'un mélange carburant et air ou une température d'une pièce du véhicule automobile.

6. Procédé selon l'une des revendications précédentes, selon lequel on détermine au moins une valeur (v, P) décrivant l'état de fonctionnement au moyen d'un modèle numérique pour un environnement dans lequel s'étend le trajet.

7. Procédé selon l'une des revendications précédentes, selon lequel on détermine au moins une valeur (v, P) décrivant l'état de fonctionnement au moyen d'un modèle numérique pour au moins une partie du véhicule automobile (10).

8. Véhicule automobile, avec un dispositif d'aide à la navigation (12) par lequel des données de trajet (26) peuvent être déterminées pour un trajet et avec un dispositif de contrôle (14) qui est conçu pour vérifier le bon fonctionnement d'un premier (20) et d'un deuxième (20) élément du véhicule automobile, la présence d'un premier état de fonctionnement prédéterminé (A1) du véhicule automobile (10) étant présupposée pour une vérification valide du premier élément (20) et le bon fonctionnement du premier élément (20) étant présupposé pour une vérification valide du deuxième élément (18),
**caractérisé en ce que** le dispositif de contrôle (14) est conçu pour recevoir les données de trajet (26) du dispositif d'assistance à la navigation (12), pour déterminer en fonction des données de trajet (26) s'il existera selon toutes prévisions une possibilité de vérifier le premier élément (20) pendant le trajet, pour vérifier le deuxième élément (18) pendant le trajet s'il existe aussi selon toutes prévisions une possibilité de vérifier le premier élément (20) et pour commencer la vérification du deuxième élément (18) pendant le trajet chronologiquement avant la vérification du premier élément (20).
